(19) Europäisches Patentamt / European Patent Office / Office européen des brevets

(11) **EP 2 833 127 A1**

(12) **EUROPEAN PATENT APPLICATION**

(43) Date of publication:
04.02.2015 Bulletin 2015/06

(51) Int Cl.:
*G01N 27/12* *(2006.01)*

(21) Application number: 13003797.1

(22) Date of filing: 30.07.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Sensirion AG**
**8712 Stäfa (CH)**

(72) Inventors:
• **Bürgi, Lukas**
**8049 Zürich (CH)**

• **von Waldkirch, Mark Stephan**
**8053 Zürich (CH)**
• **Mayer, Felix**
**8712 Stäfa (CH)**

(74) Representative: **Mirza, Akram Karim**
**E. Blum & Co. AG**
**Vorderberg 11**
**8044 Zürich (CH)**

(54) **Integrated resistive-type sensor array arrangement, each sensor comprising a sensitive metal oxide layer each having a different length between the electrodes**

(57) A chemical sensor arrangement is provided with at least two two-terminal metal oxide sensors (10,10') with a different electrode spacing and a processing unit combining measurements of the at least two sensors to eliminate contact effects and determine gas concentrations.

FIG. 3

**Description**

FIELD OF THE INVENTION

The present invention relates to an integrated chemical sensor, particularly a gas sensor using metal oxide and it use. The sensor is sufficiently small to be located within the exterior shell or housing of a portable electronic device such as a mobile phone, tablet and the like.

BACKGROUND OF THE INVENTION

Portable or mobile devices originally introduced as mobile phones or electronic agendas become more and more ubiquitous. As the processing power of their internal processors grows and equally the bandwidth for communication with stationary processors, such portable devices take on more and more the role of multi-purpose tools available to consumers and specialist users alike.

It has been recognized that portable devices can benefit from the presence of sensors capable of providing a chemical analysis of materials brought into contact or the vicinity of the device. Whilst there are many possible applications for such sensors, it suffices to consider for example the analysis of air surrounding the portable device. Such an analysis can be useful for multiple purposes such as testing for hazardous gases, breath analysis for general medical purposes or driving fitness, and the like.

Known sensors for use as chemical sensor are metal oxide type sensors. In a metal oxide or MOX sensor a sensitive layer of a metal oxide is exposed to a fluid including the analyte. As the analyte is absorbed, the resistance across the layer changes. The change is resistance can be measured and converted into a concentration of the analyte in the fluid.

However integrating such a sensor within the narrow confines of a modern day portable device poses a significant technical challenge. Typically for such devices only a very limited volume is acceded to additional sensors outside the core functionality of the device such as wireless voice or data communication, display, speaker, processors and battery. This means that the real overall dimensions of the sensor, its associated circuitry for control and readout have to be within or close to the sub-millimeter range.

A sensor with these outer dimensions can only be manufactured, if the active structures, i.e. the size of the metal oxide film between electrodes, are reduced in length to below 50 microns or even less. However, in metal oxide sensors of this size the contact resistance caused by interface effects between the (metallic) contact electrodes and the metal oxide film contribute in ever larger proportion to the measurement, thus making it more difficult to measure actual changes in gas concentrations. The interface resistance may also be less stable over the life time of the sensors and, if not compensated for, increase the error in the measurement of the chemical sensor.

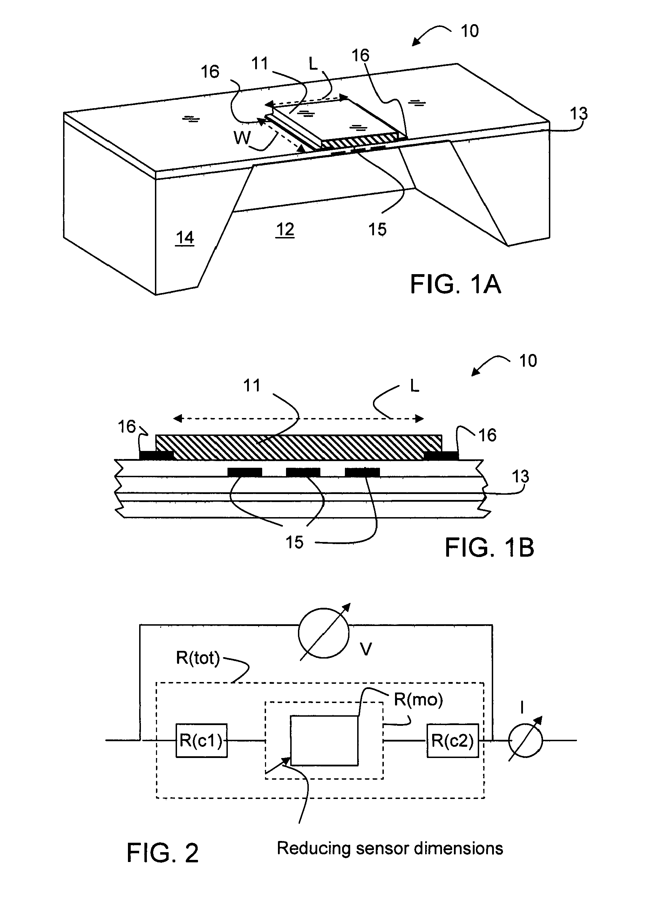

In the field of semiconductor engineering it is known to use transmission line measurements or transfer length measurements. If several such measurements are made between pairs of contacts that are separated by different distances, a plot of resistance versus contact separation can be obtained. If the contact separation is expressed in terms of the ratio L/W - where L and W are the length and width of the area between the contacts as shown in FIG. 1 - such a plot should be linear, with the slope of the line being the sheet resistance. The intercept of the line with the y-axis, is the sum of the contact resistance at the injecting and extracting electrode. Thus the sheet resistance as well as the contact resistance can be determined from this technique. Such measurements are for example described in: Kamimura, Kiichi; Wang, ZhanHe; Onuma, Yoshiharu "Contact Resistance of SnO2 Films Determined by the Transmission Line Model Method" Japanese Journal of Applied Physics, Volume 37, Issue 6A, pp. 3284 (1998), or in: Ulrich Hoefer, Klaus Steiner, Elmar Wagner "Contact and sheet resistance of SnO2 thin films from transmission-line model measurements", Sensors and Actuators B: Chemical,Volume 26, Issues 1-3, 1995, Pages 59-63.

It can be seen as an object of the invention to improve the chemical sensors using metal oxide films contacted through metallic electrodes, particularly for very small devices.

SUMMARY OF THE INVENTION

Hence, according to a first aspect of the invention, there is provided a chemical sensor arrangement comprising at least two two-terminal sensors with a different electrode spacing and a processing unit combining measurements of the at least two sensors to eliminate contact effects.

The measurement is typically a resistance measurement or an equivalent measurement such as a voltage measurement, if using a defined current source.

In case a four-point measurement is used to increase the accuracy of the single sensors the two terminal electrodes of each sensor are understood to be the sensing electrodes of the four-point arrangement.

The sensors are preferably gas sensors and more preferably gas sensors using at least one layer of metal oxide as sensing layer between the electrodes, with the layer material being preferably essentially identical for the at least two sensors.

The material of the electrodes is typically a metal, for example Pt, Au, Al or W and their alloys. The metal-oxide used can be tin oxide, tungsten oxide, gallium oxide, indium oxide, or zinc oxide or mixtures thereof in either not-intentionally doped or doped form.

It is preferred that the two sensors are manufactured basically according to the same specification and/or within the same batch manufacturing process to limit the variations between the two sensor to variations inherent in the manufacturing process and its tolerances with the exception of geometrical spacing or length and/or the width of the sensors as described below. Using the same batch process is seen as a way of ensuring that the important properties of the metal oxide layer such as its thickness, grain size distribution, porosity and others are equal within the boundaries of statistical fluctuations.

To simplify the manufacturing the metal oxide layers of the at least two sensors can be a continuous layer, preferable covering the two pairs of electrodes.

Electrodes can be shared between the at least two sensors, e.g. by using three in-line electrodes with the middle electrode being used as terminal electrode for both sensors.

The spacing, also referred to as the length of the sensor is the medium distance between the two terminal electrodes of each of the two sensors. It can be with the novel arrangement in the range of 1 to 50 $\mu$m, or even in the range of 5 to 15 $\mu$m, for the sensor with the largest electrode spacing. The width of the sensor is the horizontal layer dimension or electrode length which is perpendicular to the length as defined above.

It is in general advantageous to maintain the width equal for the at least two sensors to reduce possible sources of error from the measurement. However, it can also be beneficial to make one of the sensors as small as possible to reduce the overall area of the sensor arrangement.

In a preferred embodiment of the invention, the processing unit combines the measurement in a relation which can be represented mathematically as being close or equal to a linear relation between the measurements of the two sensors. The linear relation can be directly between measured resistance and spacing or, if a different width is used, between measured resistance multiplied by width and spacing.

The precision of a sensor arrangement in accordance with the inventions can be further enhanced by using three, four or more two-terminal sensors and combining the measurements of those sensors.

In a preferred embodiment of the invention, a sensor in accordance with this invention is integrated as component within a portable electronic device having further uses other than chemical sensing. The portable device can be a smart phone, a handheld computer, a laptop, an electronic reader, a tablet computer, a game controller, a pointing device, a photo or a video camera, a digital music player, a wrist watch, a key fob, a head set or a computer peripheral. Its housing is typically a shell of metal, glass, or plastic material and can be assembled as a unibody or from several parts. Enclosed in the housing are typically processors, drivers for parts such as screens, antennae, cameras, microphones and speakers as well as batteries to provide power to the device and its parts. A screen is typically arranged as a part of the housing or mounted behind a transparent window of the housing.

In a preferred embodiment of the invention, a sensor in accordance with this invention is behind an opening with an area of less than 3 square millimeters providing a gas permeable access to a small duct within the housing.

The duct acts as confinement for the air inside the housing and can take the shape of a tube or channel formed as part of the housing or as a separate part connected to an opening in the housing. It can be a single straight or curved duct.

The opening itself can be a dedicated opening thus exclusively connecting the chemical sensor to the outside. However, given that the manufacturers of portable electronic devices strive to maintain the housing as a good protection against humidity and water, it is seen as advantageous that the opening is shared with at least one further component of the portable device requiring a similar connection to the exterior, such as a loudspeaker, a microphone or a camera. The opening can further be protected by a grill or a membrane to prevent bigger particles or unwanted components of the air from entering or blocking the duct.

Preferably the sensors and even more preferably the sensors and the processing unit share a common substrate. Components of the processing unit are best implemented as part of a CMOS circuitry for control and read-out onto a common substrate with the two sensors.

The sensor preferably has heating elements in the vicinity of the layer of metal oxide, more preferably the heating elements are embedded within or deposited on a common substrate used to integrate CMOS circuitry for control and read-out of the sensor.

Further aspects of the invention include the use of an arrangement as described above in a method of determining gas concentration using preferably a linear interpolation between measurements of the two or more sensors with different electrode spacings.

The above and other aspects of the present invention together with further advantageous embodiments and applications of the invention are described in further details in the following description and figures.

BRIEF DESCRIPTION OF THE FIGURES

FIG. 1A is a schematic perspective view of a known metal oxide gas sensor;

FIG. 1B is schematic cross-section of the device of Fig. 1A;

FIG. 2 is an equivalent circuit diagram for a metal oxide gas sensor with larger and smaller features;

FIG. 3 is a schematic cross-section of a metal oxide gas sensor arrangement in accordance with an example of the invention;

FIGs. 4 illustrates an example for a method in which measurements of two sensors can be combined; and

FIGs. 5A - 5B illustrate a device in accordance with an example of the invention in a mobile electronic device.

DETAILED DESCRIPTION

A gas sensor 10 with a sensing layer 11 of metal oxide is shown in FIGs. 1A and 1B. The sensor is integrated with a CMOS circuitry (not shown) on a single chip. Parts of the CMOS layers 13 and handle layer 14 required for the CMOS circuit are etched away to form a MEMS device with a cavity 12 at the location of the sensor. The remaining layers including layer 13 form a thin membrane to support the actual sensor 10.

Embedded within the layers 13 are conducting elements forming a heater 15 to provide a local source of heat to heat the metal oxide 11 during operation of the sensor. The membrane structure 12 provides an inherent thermal insulation for the rest of the substrate with the CMOS circuit. Also, the temperature can rise rapidly around the metal oxide layer 11, while the thicker part of chip reacts due to its thermal inertia with a slower rise of temperature. By controlling the heater accordingly, the metal oxide can be heated to its operating temperature of 250 to 600 degrees Celsius while the temperature of the CMOS layer remains below the critical limit for operation, typically about 80 degrees Celsius.

The metal oxide layer 11 is contacted by two conductive electrodes 16 and hence acts as a resistor. In the presence of an analyte this resistance changes thereby providing a measure of the concentration of the analyte in the immediate vicinity of the metal oxide layer.

The resistance R(tot) measured across the pair of electrodes 16 and the layer of metal oxide can be represented as the sum of three resistors in series as shown in the equivalent circuit diagram of FIG. 2. In this diagram the gas sensitive area is represented by the dashed box 20. The current flowing through the electrodes 16 and the layer 11 can be determined by using either a constant current source or measured by a current meter I. The voltage drop across the outer electrodes 16 is measured by a voltmeter ΔVo. The total resistance R(tot) of the gas sensitive area can be determined by combining the voltage and current measurements using Ohm's law. Other known methods to determine R(tot) or a parameter equivalent to it can be equally applied.

This equivalent circuit diagram emphasizes the contribution of the resistors R(c1) and R(c2) representing the contact resistance at the interfaces between the metal oxide layer 11 and the two electrodes 16 to the total resistance R(tot).

In conventional metal oxide gas sensors the resistance R(mo) of the metal oxide layer is usually large and changes of it are readily accessible to the measurement without having regard to R(c1) and R(c2). However, as illustrated in FIG. 2 the relative contribution of R(c1) and R(c2) to the measured total resistance R(tot) grows as the size of the sensor 10 is reduced.

The size or dimension which is of importance for this aspect is the space between the electrodes 16, i.e. the inter-electrode distance, as bridged by the layer 11 of metal oxide and also referred to in this specification as the length L of the sensor. Referring to the width of an electrode, i.e. its lateral extension, as W, the resistances R(c1) and R(c2) are proportional to 1/W, whereas the resistance R(mo) is proportional to the ratio L/W. The proportion R(c)/R(mo) between both types of resistances varies hence with 1/L, i.e. the relative importance of interface effects increases with decreasing electrode separation L. In case of meandering or other complex shaped electrodes the length L is understood to be the minimal distance between the two electrodes. In the present example this characteristic dimension or length is assumed to be at least less than 50 microns or even less than 15 microns.

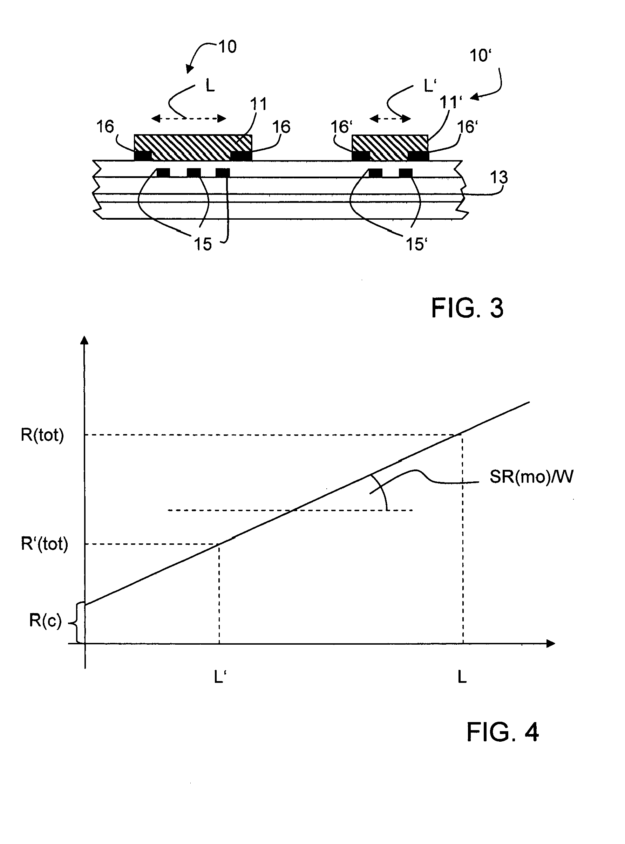

Referring now to a sensor arrangement in accordance with an example of the invention and as shown in FIG. 3, the arrangement includes a pair of sensors 10, 10' each with two electrodes 16, 16'. The pair of sensors is mounted onto the same substrate and shares controls and processing units implemented in CMOS on the same layer 13 and with the same handling layer 14.

The metal oxide layers 11, 11' are manufactured during a single manufacturing step using layer material from a single batch of deposition material under the same environmental conditions to ensure utmost similarity between the two sensors leaving purely geometrical differences, such as length and/or width between sensors as only significant differing parameters.

A method of using the above sensor arrangement for the purpose of determining the concentration of a gas component in a sample is illustrated in FIG. 4 using partly the notation used when referring to FIG. 2. Combining the contact resistances in R(c) = R(c1) + R(c2) and using the sheet resistance of the layer of metal oxide SR(mo),the total resistance R(tot) can be represented as

$$[1A] \qquad R(tot) = SR(mo) * L/W + R(c)$$

Assuming further that the contact resistance R(c) is to a large extent independent of L the sensors 10, 10' measure the total resistances:

$$[1B] \qquad R(tot) = SR(mo) * L/W + R(c)$$

and

$$[1C] \qquad R'(tot) = SR(mo) * L'/W + R(c).$$

In the above equation the width W of both sensors is equal. The contact resistance R(c) can be gained from extrapolating the plot to L = 0. In cases where the respective widths W,W' differ, the above equations have to be formulated with width-independent contact resistances R(c)/W and R(c)/W' and hence the linear fit is performed using the R(tot)*W and R'(tot)*W' instead of R(tot)and R'(tot) in the above equations.

With more than two sensors used in the measurement the above system of linear equations is extended accordingly.

In this method the concentration of a gas component is derived from the sheet resistance and not from the total resistance as in the conventional methods of gas measurements with metal oxide gas sensors.

The electrodes and MOX layer can be manufactured using methods known per se such as physical or chemical deposition from a vapor phase, sputtering, and casting. Alternatively a contact-free printing method can be used, e.g. an inkjet printing method, with several layers deposited onto each other (after a suitable drying period). In order to create larger areas, dots of one material, e.g. of electrode material or MOX material, can be deposited next to each other in an overlapping manner.

Any structures in the electrodes can be generated using for example a wet or dry etching process, by performing the deposition process through a mask or by using a deposition process capable of writing lines with the required resolution.

The material of the electrodes is typically a metal, for example Pt, Au, Al or W and their alloys. The metal-oxide used can be tin oxide, tungsten oxide, gallium oxide, indium oxide, or zinc oxide or mixtures thereof in either not-intentionally doped or doped form.

For implementing the method represented by FIG. 4 any of the known methods for linear inter-and extrapolation can be used. Equivalently, the equations [1B] and [1C] can be solved as a set of linear equations for the unknowns SR(mo) and R(c).

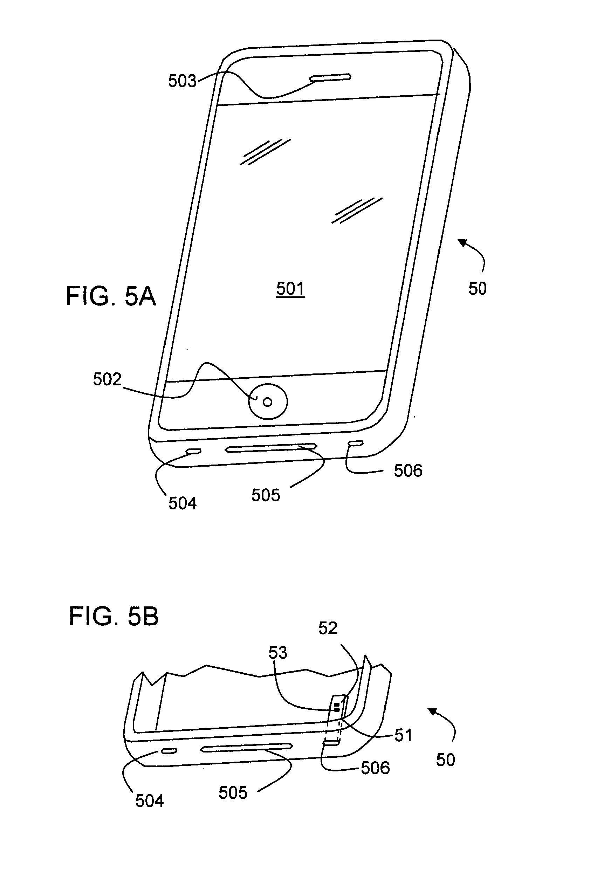

A chemical sensor arrangement in accordance with above can be for example part of a portable electronic device such as a mobile phone as shown in FIG. 5A and 5B. As described above the chemical sensor arrangement needs to be of a (sufficiently small) size to fit within the limited volume available.

In FIG. 5A, the housing 50 of the mobile phone includes a front side with a screen 501 and elements like buttons 502 to let a user interact with the phone. Also shown on the front side is an opening 503 for a loudspeaker. Further openings 504,505 are located at a lower side wall of the housing 50. It is well known to mount components like microphones and loudspeakers behind such openings.

Another opening 506 is located at the lower side wall. As shown in FIG. 5B the opening 106 is linked to a tubular duct 51 passing through the interior of the housing. A chemical sensor arrangement 52 and a humidity sensor 53 are both mounted along the duct 51 such that the sensitive areas of both sensors are essentially exposed air of the same composition entering the duct through the opening 506. The actual size and shape of the duct 51 depends on the volume available and the nature of the chemical sensor 52 and the humidity sensor 53, but given the physical constraints of portable mobile devices the diameter of the opening is typically in the range of less than 2mm and in the present example actually about 1mm.

The chemical sensor arrangement 52 is a sensor arrangement in accordance with the examples described above and both it and the humidity sensor 53 can be manufactured as described for example in the cited application WO 2012/100362 or in WO 95/19563. The humidity sensor is best combined with a temperature sensor. Such sensors are commercially available, e.g. from Sensirion™ under the trade name SHTC1. The SHTC1 sensor measures 2 mm x 2 mm x 0.8 mm. Both sensors are mounted adjacent to each other in the duct 51.

While there are shown and described presently preferred embodiments of the invention, it is to be understood that the invention is not limited thereto but may be otherwise variously embodied and practised within the scope of the following claims.

## Claims

1.   A sensor arrangement comprising at least two sensors (10,10') with each having a layer of a metal oxide (11,11') responsive to changes in gas concentrations by change of resistance arranged between two electrodes (16,16') wherein the sensors (10,10') have a different length (L,L') between the electrodes (16,16') and a processing unit to derive a gas concentrations using a sheet resistance (SR(mo)) derived from combining measurements of the at least two sensors (10,10').

2.   The sensor arrangement of claim 1, wherein the length (L) between the two electrodes (16) is in the range of 1 to 50 $\mu$m for the sensor with the largest electrode spacing.

3.   The sensor arrangement of claim 1, wherein the length (L) between the two electrodes (16) is in the range of 5 to 15 $\mu$m for the sensor with the largest electrode spacing.

4.   The sensor arrangement of claim 1, wherein the difference in length (L) between the two electrodes (16) is more than 50 percent between the sensor with the largest electrode spacing and the sensor with the smallest electrode spacing.

5.   The sensor arrangement according to any of the preceding claims, wherein the width (W) of both sensors (10,10') is equal.

6.   The sensor arrangement according to any of the preceding claims, wherein the processing unit includes a linear interpolator or a solver for a system of linear equations.

7.   The sensor arrangement according to any of the preceding claims, wherein the processing unit is adapted to determine the contact resistances of the electrodes or an equivalent thereof.

8.   The sensor arrangement according to any of the preceding claims, being integrated with a CMOS circuit (13) onto a common substrate.

9.   The sensor arrangement according to any of the preceding claims, wherein the at least two sensors (10,10') are located on a membrane above a single cavity (12) in a substrate.

10.   The sensor arrangement according to any of the preceding claims, comprising heating elements (15,15') to heat the metal oxide layers (11,11') to an operating temperature, wherein the heating elements are part of a MEMS-type structure.

11.   The sensor arrangement according to claim 10, wherein the heating elements (15,15') are connected in series.

12.   A portable electronic device comprising a sensor arrangement in accordance with any of the preceding claims.

13.   The portable electronic device according to claim 12, being selected from a group comprising:

a mobile phone,
a handheld computer,
an electronic reader,
a tablet computer,
a game controller,
a pointing device,
a photo or a video camera,
a digital music player,
a wrist watch,
a key fob,
a head set, and
a computer peripheral.

14. A method of operating a chemical sensor arrangement, comprising the steps arranging at least two sensors (10,10') with each having a layer of a metal oxide (11,11') responsive to changes in gas concentrations by change of resistance arranged between two electrodes (16,16') wherein the sensors (10,10') have a different length (L,L') between the electrodes (16,16')and deriving a gas concentrations using a sheet resistance (SR(mo)) derived from combining measurements of the at least two sensors (10,10').

15. The method of claim 14, further including the step of using linear interpolation and deriving the sheet resistance (SR(mo)) from the interpolation.

FIG. 1A

FIG. 1B

FIG. 2     Reducing sensor dimensions

FIG. 3

FIG. 4

503

**FIG. 5A**

501

50

502

504    505    506

**FIG. 5B**

52

53

51

506

50

504    505

Europäisches
Patentamt

European
Patent Office

Office européen
des brevets

## EUROPEAN SEARCH REPORT

Application Number

EP 13 00 3797

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/122287 A1 (ENVIRONICS OY [FI]; UTRIAINEN MIKKO [FI]) 1 November 2007 (2007-11-01) * page 1, line 15 - line 22 * * page 7, line 9 * * page 9, line 4 - line 31 * * page 12, line 13 - page 13, line 13 * * figures 3b,4,5 * | 1-15 | INV. G01N27/12 |
| A | DE 44 24 342 C1 (FRAUNHOFER GES FORSCHUNG [DE]) 2 November 1995 (1995-11-02) * the whole document * | 1-14 | |
| A | EP 0 527 258 A1 (SIEMENS AG [DE]) 17 February 1993 (1993-02-17) | 1-14 | |
| A | WO 2013/039468 A1 (HEWLETT PACKARD DEVELOPMENT CO [US]; MOUREY DEVIN A [US]; HOFFMAN RAND) 21 March 2013 (2013-03-21) | 1-14 | |
| A | US 6 631 333 B1 (LEWIS NATHAN S [US] ET AL) 7 October 2003 (2003-10-07) * the whole document * | 1-14 | TECHNICAL FIELDS SEARCHED (IPC) G01N |

The present search report has been drawn up for all claims

| Place of search | Date of completion of the search | Examiner |
|---|---|---|
| Munich | 17 December 2013 | Klein, Marc-Oliver |

EPO FORM 1503 03.82 (P04C01)

**ANNEX TO THE EUROPEAN SEARCH REPORT
ON EUROPEAN PATENT APPLICATION NO.**

EP 13 00 3797

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2013

| Patent document cited in search report | | Publication date | Patent family member(s) | | Publication date |
|---|---|---|---|---|---|
| WO 2007122287 | A1 | 01-11-2007 | EP<br>FI<br>US<br>WO | 2013612 A1<br>20060389 A<br>2009312954 A1<br>2007122287 A1 | 14-01-2009<br>22-10-2007<br>17-12-2009<br>01-11-2007 |
| DE 4424342 | C1 | 02-11-1995 | DE<br>WO | 4424342 C1<br>9601992 A1 | 02-11-1995<br>25-01-1996 |
| EP 0527258 | A1 | 17-02-1993 | DE<br>EP<br>US | 59106772 D1<br>0527258 A1<br>6235243 B1 | 30-11-1995<br>17-02-1993<br>22-05-2001 |
| WO 2013039468 | A1 | 21-03-2013 | NONE | | |
| US 6631333 | B1 | 07-10-2003 | US<br>US<br>US | 6631333 B1<br>2008077331 A1<br>2008262743 A1 | 07-10-2003<br>27-03-2008<br>23-10-2008 |

EPO FORM P0459

For more details about this annex : see Official Journal of the European Patent Office, No. 12/82

## REFERENCES CITED IN THE DESCRIPTION

**Patent documents cited in the description**

- WO 2012100362 A

- WO 9519563 A

**Non-patent literature cited in the description**

- **KAMIMURA, KIICHI ; WANG, ZHANHE ; ONUMA, YOSHIHARU.** Contact Resistance of SnO2 Films Determined by the Transmission Line Model Method. *Japanese Journal of Applied Physics,* 1998, vol. 37 (6A), 3284

- **ULRICH HOEFER ; KLAUS STEINER ; ELMAR WAGNER.** Contact and sheet resistance of SnO2 thin films from transmission-line model measurements. *Sensors and Actuators B: Chemical,* 1995, vol. 26 (1-3), 59-63